# EUROPEAN PATENT SPECIFICATION

(11) **EP 1 000 571 B1**
(45) Date of publication and mention of the grant of the patent: **09.04.2003**
(21) Application number: 99500204.5
(22) Date of filing: 05.11.1999
(51) Int. Cl.: A47D 13/02, B60N 2/28

(54) **A carrycot**
Eine Babytragevorrichtung
Un berceau porte-bébé

(30) Priority: 10.11.1998 ES 9802818 U
(43) Date of publication of application: 17.05.2000
(73) Proprietor: Jané S.A., E-08184 Palau de Plegamans (Barcelona) (ES)
(72) Inventor: Jane Cabagnero, Ramon, c/o Jane, S.A., 08184 Palau de Plegamans, Barcelona (ES)
(74) Representative: Pastells Teixido, Manuel

(56) References cited:
- FR-A- 2 740 419
- US-A- 5 115 523

## Description

The present invention refers to a carrycot.

Baby seats are already known which are apt to be converted into carrycots and do basically comprise the seat itself having a back linked to it in a hinged connection.

Carrycots are also known which are formed by two members namely being a front and a back member, said members being linked to each other in a hinged connection and comprising a seat arranged on said front member (US-A-5 115 523).

It is the object of this invention to improve this type of carrycot by providing it with simple, practical and efficient means to obtain a juxtaposed arrangement of the seat on the bottom of the carrycot when this latter is being used as such, said seat adopting different inclinations when the back member of the carrycot is also arranged in differently inclined positions when serving as a seat back.

It is for such a purpose characteristic that the seat is at its back edge linked in a hinged connection to the bottom of the front member of the carrycot, said seat being at its middle region and through links also linked in a hinged connection to the front region of the back member of the carrycot, at a point being eccentrically arranged with respect to the hinge axis of the hinged connection between both members of the carrycot.

The hinged connection between both members of the carrycot is provided with means to limit its swinging arc in order to thus protect the baby against an excessive approach between seat and back.

These and other characteristics will be best made apparent by the following detailed description whose understanding will be made easier by the accompanying sheet of drawings showing a practical embodiment cited only by way of an example not limiting the scope of the present invention.

In the drawings:
Fig. 1 is a perspective view of the carrycot in question;
Fig. 2 illustrates in a side elevation this carrycot having been arranged as a seat; and
Fig. 3 shows in a side elevational section said carrycot arranged as in Fig. 2.

According to the drawings the carrycot is formed by two members namely being a front member 1 and a back member 2, said members being linked to each other in a hinged connection by means of two lateral pins 3 each of which is arranged at its respective side, said front member being fitted with a seat 4.

The seat 4 is formed by a plate that by means of hinges 5 provided at its back edge is linked in a hinged connection to the middle region of the bottom 6 of the front member 1 of the carrycot, said seat 4 being at its middle region and through lateral links 7 also linked in a hinged connection to a point 8 of the front region of the back member 2 of the carrycot, said point 8 being eccentrically arranged with respect to the pin 3 linking both members of the carrycot in a hinged connection.

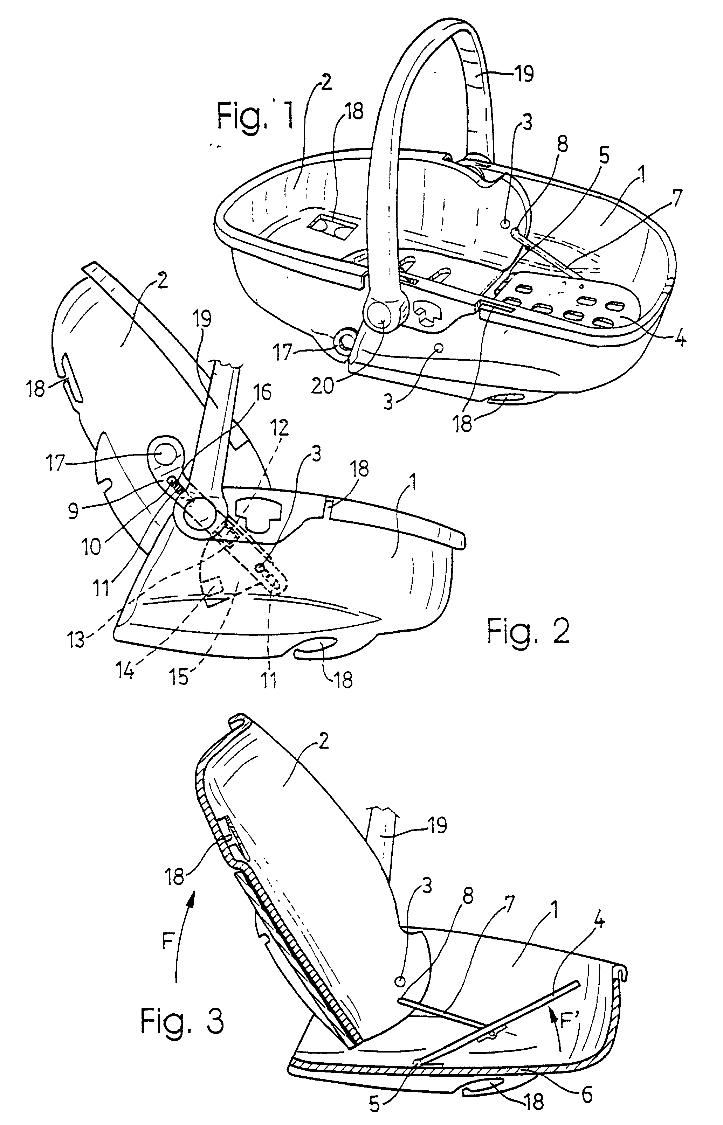

With this arrangement, when the back member 2 is arranged as an extension of the front member 1 and on the same plane as this latter (Fig. 1) the seat 4 is arranged in a juxtaposed arrangement on the bottom 6 of said front member thus allowing to use the carrycot as such.

When the back member 2 is raised by means of swinging it up around said pins 3 (arrow F, Fig. 3) said links 7 do then raise the seat 4 as per arrow F', said back member 2 and seat 4 being thus arranged in an inclined arrangement apt to convert the carrycot into a seat wherein the back member 2 serves as a seat back.

At the hinged connection between both members of the carrycot means have been provided to limit its swinging arc, said means consisting in a bolt 9 guided on the pin 3 itself and on a point 10 of the sides of member 2 of the carrycot by means of respective slots 11, said bolt having a catch 12 apt to be selectively engaged into one of two sockets 13 and 14 provided at the opposite ends of a sector-shaped part 15 integral with the sides of the front member 1 of the carrycot.

The bolt 9 is fitted with a spring 16 that keeps it in its locked position, and at its rear end said bolt is provided with a grip 17 allowing to pull it thus overcoming the resistance of the spring in order to thus be in a position to switch the catch 12 in its engaged arrangement from one socket to the other.

The carrycot is provided with several attachments 18 allowing to secure it by means of the corresponding strappings of the safety belts on the back seat of a motor vehicle.

The carrycot is completed with a rigid handle 19 in the shape of an inverted U linked at its ends in a hinged connection to the sides of the front member 1 of the carrycot, said handle being retained in its folded and service positions with means provided at its hinge ends 20.

This carrycot will of course comprise the arrangement of a soft upholstery (not shown) removably fitted in order to thus allow to replace or wash it.

The invention can within its essentiality be put into practice in other embodiments differing only in detail from the one described above only by way of example, said other embodiments also falling within the scope of the protection claimed. This carrycot can hence be manufactured in any shape and size with the best suited means and materials and with the most convenient accessories, and its integrating elements can be replaced with others being technically equivalent, all this falling within the scope of the appended claims.

## Claims

1. A carrycot formed by two members namely being a front member (1) and a back member (2), said members being linked to each other in a hinged connection, said carrycot comprising a seat (4) arranged on said front member; **characterized in that** the seat is at its back edge linked in a hinged connection to the bottom (6) of the front member (1) of the carrycot, said seat being at its middle region and through links (7) also linked in a hinged connection to the front region of the back member (2) of the carrycot, at a point (8) being eccentrically arranged with respect to the hinge axis of the hinged connection between both members (1,2) of the carrycot.

2. A carrycot as per claim 1, **characterized in that** the hinged connection between both members of the carrycot is provided with means to limit its swinging arc.

## Patentansprüche

1. Ein Kleinkindtragekorb, bestehend aus zwei Einzelteilen, nämlich einem Vorderteil (1) und einem Rückenteil (2), die über ein Drehgelenk miteinander verbunden sind, und welcher Tragekorb einen Sitz (4) beinhaltet, welcher an dem genannten Vorderteil angebracht ist, **dadurch gekennzeichnet, dass** der Sitz an seiner rückseitigen Kante am Boden (6) des Vorderteiles des Tragekorbes angelenkt ist, während der genannte Sitz an seinem mittleren Teil durch Anlenkstangen (7) an der Vordergegend des Rückenteiles (2) an einem Punkt (8) angelenkt ist, welcher außerhalb der Anlenkachse zwischen den beiden Einzelteilen (1,2) des Tragekorbes zu liegen kommt.

2. Ein Kleinkindtragekorb gemäss Patentanspruch 1, **dadurch gekennzeichnet, dass** die Anlenkung zwischen den beiden Einzelteilen des Tragekorbes mit Mitteln versehen ist, die imstande sind, den Ausschwingbogen des Rückenteiles gegenüber dem Fussteil zu begrenzen.

## Revendications

1. Porte-bébé se composant de deux parties, une partie avant (1) et une partie arrière (2), articulées entre elles, et comprenant un siège (4) placé à cette partie avant, **caractérisé par le fait que** ce siège s'articule par le bord arrière avec le fond (6) de la partie avant (1) du porte-bébé et par sa zone intermédiaire au moyen d'entretoises (7) avec la partie avant de l'arrière (2) du porte-bébé, en un point (8) excentrique par rapport à l'axe d'articulation entre les deux parties (1,2) du porte-bébé.

2. Porte-bébé, selon la revendication 1, **caractérisé par le fait que** l'articulation entre les deux parties du porte-bébé dispose de systèmes permettant de limiter la rotation de celle-ci.
